# EUROPÄISCHE PATENTSCHRIFT

(11) **EP 2 599 150 B1**
(45) Veröffentlichungstag und Bekanntmachung des Hinweises auf die Patenterteilung: **13.09.2017**
(21) Anmeldenummer: 11743219.5
(22) Anmeldetag: 25.07.2011
(51) Int. Cl.: H01M 6/50, H01M 10/44, H01M 10/48, H01M 2/34, H02J 7/00, B60R 21/017

(54) **SICHERHEITSEINRICHTUNG**
SAFETY DEVICE
DISPOSITIF DE SÉCURITÉ

(30) Priorität: 27.07.2010 DE 102010038460
(43) Veröffentlichungstag der Anmeldung: 05.06.2013
(73) Patentinhaber: Robert Bosch GmbH, 70442 Stuttgart (DE)
(72) Erfinder: BERTSCH, Jochen, 75417 Muehlacker-Grossglattbach (DE); LIEBENOW, Cornelius, 70771 Leinfelden-Echterdingen (DE)
(86) Internationale Anmeldenummer: PCT/EP2011/062710
(87) Internationale Veröffentlichungsnummer: WO 2012/013616

(56) Entgegenhaltungen:
- EP-A1- 2 284 929
- JP-A- 2002 231 319
- JP-A- 2004 319 463
- US-A1- 2003 027 036
- US-A1- 2005 255 376
- US-B2- 7 713 651

## Beschreibung

### Stand der Technik

Batterien zur elektrochemischen Speicherung beinhalten häufig aggressive Stoffe, deren Freisetzung zu einer Gefährdung von Personen und Gegenständen führen kann. Bei einigen Energiespeichern, beispielsweise bei Lithium-Ionen ("Lilon") Batterien, besteht zusätzlich Brand- bzw. Explosionsgefahr, da das verwendete Elektrolyt brennbar ist. Folglich werden bekannte Batterien und Kondensatoren derart aufgebaut, dass sie zu erwartenden mechanischen Belastungen stand halten können, ohne dass eine Umhüllung der Batterie verletzt wird, so dass ein Übertritt der gefährlichen Stoffe in eine Umgebung des Energiespeichers verhindert ist.
Beispielsweise zeigt die US 2003/027036 A1 eine Sicherheitseinrichtung mit einer Entladeeinrichtung zur Entladung eines elektrischen Energiespeichers bei einer bevorstehenden oder erfolgten Deformierung des Energiespeichers.

Trotzdem ist eine Beschädigung der Umhüllung nie ganz auszuschließen. Beispielsweise im Bereich von Kraftfahrzeugen, wo eine Batterie zur Bordnetzversorgung oder zum Antrieb verwendet werden kann, kann bei einem Unfall auch eine gut gesicherte Batterie stark deformiert werden und aufplatzen. Eine Entzündung des austretenden Elektrolyts kann während der Deformierung oder später erfolgen, eventuell auch erst nach mehreren Sekunden oder Minuten.

Der Erfindung liegt daher die Aufgabe zugrunde, eine Sicherheitseinrichtung und ein Sicherheitsverfahren zum Schutz von Mensch und Material vor einem durch Deformation beschädigten Energiespeicher bereitzustellen.

Die Erfindung löst dieses Problem durch eine Sicherheitseinrichtung mit den Merkmalen des Anspruchs 1, ein Sicherheitsverfahren mit den Merkmalen des Anspruchs 10 und ein Computerprogrammprodukt mit den Merkmalen des Anspruchs 11.

### Offenbarung der Erfindung

Die Brand- bzw. Explosionsgefährlichkeit von Energiespeichern wie Batterien und Kondensatoren bzw. deren Elektrolyten ist abhängig von einem Ladezustand des Energiespeichers. Untersuchungen haben gezeigt, dass Folgeschäden einer Deformierung durch Brand oder Explosion in vielen Fällen bereits vermieden werden können, wenn der Ladezustand des Energiespeichers bei der Freisetzung des Elektrolyts um einen geringen Anteil gesenkt ist.

Es wird daher erfindungsgemäß vorgeschlagen, eine Sicherheitseinrichtung mit einer Entladeeinrichtung zur Entladung eines elektrischen Energiespeichers bei einer bevorstehenden oder erfolgten Deformierung des Energiespeichers einzusetzen. Abhängig von einer Deformierungsgeschwindigkeit und einer maximalen Kapazität der Batterie sowie gegebenenfalls einer Vorwarnzeit bis zur voraussichtlichen Deformierung der Batterie kann es so gelingen, den Ladezustand der Batterie rechtzeitig um einen entscheidenden Anteil zu senken, so dass ein Brand bzw. eine Explosion durch austretendes Elektrolyt vermieden werden kann.

In einer ersten Variante der Erfindung umfasst die Sicherheitseinrichtung eine Bestimmungseinrichtung zur Bestimmung einer bevorstehenden oder erfolgten Deformierung des Energiespeichers und eine Entladeeinrichtung zur Entladung des Energiespeichers in Abhängigkeit des Bestimmungsergebnisses. Die Bestimmungseinrichtung kann in vorteilhafter Weise mit einem Sensor oder einer Verarbeitungseinrichtung im Umfeld der Batterie verbunden sein, um die Qualität der Bestimmung zu steigern. Beispielsweise kann in einem Kraftfahrzeug ein auf einen Zusammenstoß hinweisendes Signal eines Sicherheitssystems ("precrash") empfangen werden. Alternativ oder zusätzlich können Sensorwerte aufgenommen werden, auf deren Basis eine bevorstehende Deformierung des Energiespeichers durch die Bestimmungseinrichtung bestimmt wird.

In einer Ausführungsform ist die Bestimmungseinrichtung dazu eingerichtet, eine Deformierungsgeschwindigkeit des Energiespeichers zu bestimmen, wobei die Entladeeinrichtung dazu eingerichtet ist, den Energiespeicher in Abhängigkeit der bestimmten Deformierungsgeschwindigkeit zu entladen. Ist die bestehende bzw. bevorstehende Deformierungsgeschwindigkeit hoch, so kann beispielsweise eine Entladegeschwindigkeit des Energiespeichers ebenfalls hoch sein.

In ähnlicher Weise kann die Bestimmungseinrichtung dazu eingerichtet sein, einen Deformierungsgrad des Energiespeichers zu bestimmen, wobei die Sicherheitseinrichtung dazu eingerichtet ist, den Energiespeicher in Abhängigkeit des bestimmten Deformierungsgrades zu entladen. Ist der bestehende bzw. bevorstehende Deformierungsgrad hoch, so kann die Entladegeschwindigkeit des Energiespeichers ebenfalls hoch sein.

In einer zweiten Variante der Erfindung, die mit der ersten Variante kombinierbar ist, sind am Energiespeicher ein erstes und ein zweites elektrisches Kontaktelement nebeneinander angebracht. Das erste Kontaktelement ist dazu eingerichtet, sich bei axialer Stauchung radial auszudehnen, so dass eine leitende Verbindung mit dem zweiten Kontaktelement entsteht. Eine solche Ausführungsform kann einfach und kostengünstig herstellbar sein. Durch die rein mechanische Implementierung kann eine sehr hohe Zuverlässigkeit der Sicherheitseinrichtung erreicht werden.

Das erste Kontaktelement hat die Form eines eingeschnürten oder bauchigen Hohlzylinders, um die radiale Ausdehnung bei axialer Verformung zu begünstigen. Ferner kann das erste Kontaktelement einen axialen Schlitz aufweisen. Insbesondere kann der Schlitz in einer Richtung verlaufen, die auf einer Richtung, in der das zweite Kontaktelement angeordnet ist, senkrecht steht. Der Schlitz kann es ermöglichen, dass ein Abschnitt des ersten Kontaktelements, der dem zweiten Kontaktelement zugewandt ist, sich bei axialer Deformierung leichter in Richtung des zweiten Kontaktelements verformen lässt.

Bevorzugterweise ist auch das zweite Kontaktelement in entsprechender Weise verformbar ausgeführt, so dass die Kontaktelemente bei Verformung einen guten elektrischen Kontakt miteinander herstellen.

Die Entladeeinrichtung kann dazu eingerichtet sein, elektrische Energie in Wärmeenergie umzuwandeln. Es kann eine thermische Masse bereitgestellt sein, die wärmeleitfähig mit der Entladeeinrichtung verbunden ist. Die thermische Masse kann ihren Aggregatszustand unter Aufnahme von Wärmeenergie wechseln. So kann eine große Wärmemenge innerhalb kurzer Zeit abführbar sein. Dadurch können eine Entladegeschwindigkeit der Sicherheitseinrichtung erhöht und eine Gefahr durch eine stark erwärmte Entladeeinrichtung minimiert sein.

Ein Sicherheitsverfahren zum Entladen eines elektrischen Energiespeichers umfasst Schritte des Bestimmens einer bevorstehenden oder erfolgten Deformierung des Energiespeichers und des Entladens des Energiespeichers in Abhängigkeit des Bestimmungsergebnisses.

Teile des Verfahrens, insbesondere die Bestimmung einer bevorstehenden Deformierung des Energiespeichers, können im Rahmen einer Funktionalität ausgeführt werden, die im Umfeld des elektrischen Energiespeichers ohnehin zur Verfügung steht. Diese Funktionalität kann insbesondere ein Energieverwaltungssystem des Energiespeichers sein.

Das Verfahren kann als Computerprogrammprodukt mit Programmcodemitteln auf einer Verarbeitungseinrichtung ablaufen oder auf einem computerlesbaren Datenträger gespeichert sein.

### Kurzbeschreibung der Figuren

Die Erfindung wird nun mit Bezug auf die beigefügten Figuren genauer beschrieben, in denen:
- Fig. 1 ein Blockschaltbild einer Sicherheitseinrichtung;
- Fig. 2 einen Widerstand der Sicherheitseinrichtung aus Fig. 1;
- Fig. 3 eine mechanische Sicherheitseinrichtung;
- Fig. 4 eine alternative Ausführungsform der Kontaktelemente der Sicherheitseinrichtung aus Fig. 4; und
- Fig. 5 ein Ablaufdiagramm für ein Verfahren zur Steuerung der Sicherheitseinrichtung aus Fig. 4.
darstellt.

### Genaue Beschreibung von Ausführungsformen

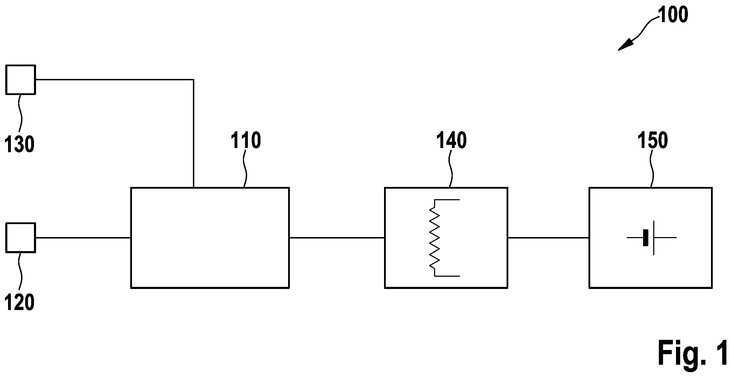

Fig. 1 zeigt eine Sicherheitseinrichtung 100 als Blockschaltbild. Eine Verarbeitungseinrichtung 110 ist mit einem Sensor 120 verbunden. Die Verarbeitungseinrichtung 110 ist bevorzugterweise eine elektronische Verarbeitungseinrichtung in Form eines Mikrocomputers, kann aber auch als fest verdrahtete Logik aufgebaut sein.

Der Sensor 120 ist üblicherweise am Energiespeicher 150 oder in dessen unmittelbarer Nähe angeordnet. Der Sensor 120 kann eine oder mehrere physikalische Größen aufnehmen, die auf eine erfolgte oder bevorstehende Deformierung des Energiespeichers 150 hinweisen, beispielsweise eine Dehnung, Stauchung, Kraft, Beschleunigung oder Vibration. In weiteren Ausführungsformen können auch mehrere dieser Größen kombiniert oder durch mehrere Sensoren 120 abgetastet und der Verarbeitungseinrichtung 110 bereitgestellt werden.

Die Verarbeitungseinrichtung 110 ist ferner mit einer Schnittstelle 130 verbunden, über die weitere Sensorwerte und/oder Bestimmungsergebnisse mit anderen Komponenten austauschbar sind. Bei Einsatz der Sicherheitseinrichtung 100 in einem Kraftfahrzeug kann die Verarbeitungseinrichtung 110 mittels der Schnittstelle 130 mit einem oder mehreren Steuersystemen des Kraftfahrzeugs verbunden sein.

Darüber hinaus ist die Verarbeitungseinrichtung 110 mit einer Entladeeinrichtung 140 verbunden, die dazu eingerichtet ist, elektrische Energie aus einem Energiespeicher 150 zu entnehmen. Der Energiespeicher 150 kann Bestandteil der Sicherheitsvorrichtung 100 oder ein separates Bauelement sein. In beiden Fällen können andere Elemente der Sicherheitseinrichtung 100, insbesondere die Verarbeitungseinrichtung 100, in unmittelbarer Nähe oder sogar innerhalb des Energiespeichers 150 angeordnet sein.

Der Energiespeicher 150 ist üblicherweise ein elektrochemischer Energiespeicher, beispielsweise eine Lithium-Ionen-Batterie, eine Nickelmetallhydrid ("NiMh") Batterie oder ein Doppelschichtkondensator. Eine Neigung des Energiespeichers 150, bei Deformierung oder einem anders begründeten Austritt von Elektrolyt zu explodieren oder Feuer zu fangen, ist abhängig von einem Ladezustand des Energiespeichers 150. Je höher der Ladezustand des Energiespeichers 150 ist, desto höher ist die Gefahr einer Explosion oder eines Feuers.

Die Entladeeinrichtung 140 ist elektrisch leitend mit dem Energiespeicher 150 verbunden. Um innerhalb von kurzer Zeit eine große Menge elektrischer Energie sicher aus dem Energiespeicher 150 entnehmen zu können, sind leistungsfähige elektrische Verbindungen mit großen Querschnitten, etwa in Form von geflochtenen Kupferkabeln, bevorzugt. Die Entladeeinrichtung 140 umfasst einen Schalter, mit dem die Entnahme elektrischer Energie aus dem Energiespeicher 150 gesteuert werden kann. Der Schalter kann beispielsweise einen oder mehrere Transistoren, etwa Feldeffekttransistoren ("FET"), umfassen. Es kann auch ein konventioneller Schalter, etwa mit magnetischer, hydraulischer oder pneumatischer Betätigung, vorgesehen sein. Die Entladeeinrichtung 140 wandelt die aus dem Energiespeicher 150 entnommene elektrische Energie in eine andere Energieform um, bevorzugterweise in Wärme. In anderen Ausführungsformen kann die entnommene Energie auch anderweitig genutzt werden, beispielsweise zum Aufladen eines anderen Energiespeichers wie einer Bleibatterie.

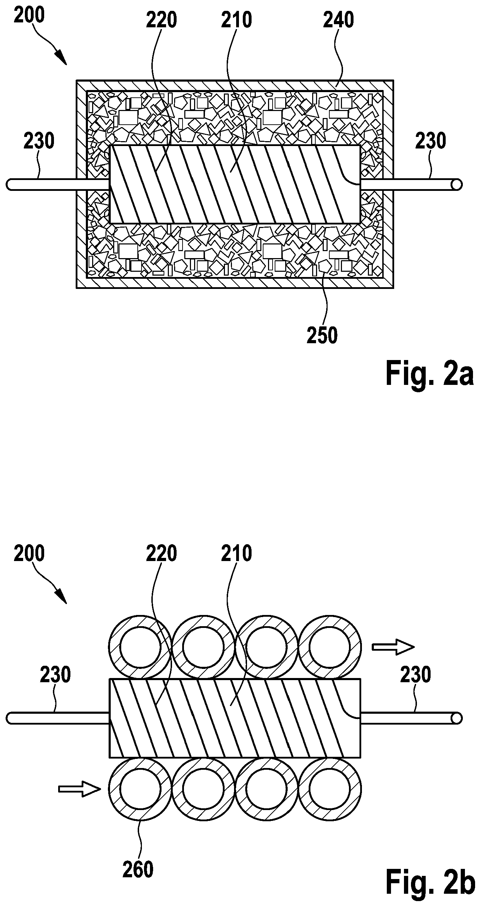

Figuren 2A und 2B zeigen unterschiedliche Ausführungsformen eines Widerstandes 200 zur Umwandlung von elektrischer Energie in Wärmeenergie innerhalb der Entladeeinrichtung 140 aus Fig. 1. Ein Isolationskörper 210 ist von einem Widerstandsdraht 220 mehrfach umlaufen, der mit elektrischen Anschlüssen 230 verbunden ist. Der Isolationskörper 210 stützt die Windungen des Widerstandsdrahts 220 ab und ist bevorzugterweise aus einem keramischen Material mit hohem Wärmeleitwert gefertigt. In anderen Ausführungsformen kann der Isolationskörper 210 auch entfallen.

In Fig. 2A umfasst der Widerstand 200 ferner ein Gehäuse 240, das den Isolationskörper 210, den Widerstandsdraht 220 und ein Salzgranulat 250 aufnimmt. Das Salzgranulat 250 ändert unter dem Einfluss von Wärme seinen Aggregatszustand von fest nach flüssig, wobei das Salzgranulat 250 große Mengen Wärmeenergie aufnimmt. Fließt Strom durch den Widerstandsdraht 220, so erwärmt sich dieser und in der Folge erwärmt sich auch das Salzgranulat 250. Bei einer spezifischen Temperatur ändert das Salzgranulat 250 seinen Aggregatszustand von fest in flüssig, wobei es signifikante Mengen von Wärmeenergie aufnimmt, so dass der Widerstandsdraht 220 gekühlt wird. Es kann eine Vorrichtung zum Ablaufen verflüssigten Salzgranulats 250 vorgesehen sein, so dass der Widerstandsdraht 220 von weiterem festen Salzgranulat 250 umgeben werden kann.

In anderen Ausführungsformen kann auch eine andere thermische Masse als das Salzgranulat 250 verwendet werden, die unter Einfluss von Wärme des Widerstandsdrahts 220 seinen Aggregatszustand bzw. seine Phase ändert, etwa von fest in flüssig und/oder von flüssig in gasförmig.

Fig. 2B zeigt eine Variante des Widerstands 200 aus Fig. 2A. Der Isolationskörper 210, der Widerstandsdraht 220 und die elektrischen Anschlüsse 230 sind aufgebaut wie in Fig. 2A, allerdings ist an Stelle des Gehäuses 240 mit dem Salzgranulat 250 aus Fig. 2A ein Schlauch- bzw. Rohrsystem 260 zur Kühlung des Widerstandsdrahts 220 mittels Flüssigkeit vorgesehen. Das Rohrsystem 260 umläuft den Isolationskörper 210 mit dem Widerstandsdraht 220 mehrfach und die Flüssigkeit fließt durch das Rohrsystem 260. Die Flüssigkeit kann Bestandteil eines Flüssigkühlsystems eines Kraftfahrzeugs sein, in dem das Sicherheitssystem 100 aus Fig. 1 eingebaut ist. In einer anderen Ausführungsform können der Isolationskörper 210 und der Widerstandsdraht 220 auch unmittelbar von Kühlflüssigkeit umströmt sein. Dazu können der Isolationskörper 210 und der Widerstandsdraht 220 innerhalb des Rohrsystems 260 angeordnet sein.

Der Widerstand 200 ist vorzugsweise derart angeordnet, dass die an ihm entstehende Wärme an eine Umgebung, beispielsweise andere Teile des Kraftfahrzeugs, abgegeben werden kann. Diese Teile können beispielsweise eine Karosserie, Fahrwerksteile oder einen Motorblock beinhalten. In einer weiteren Ausführungsform ist der Widerstand 200 durch einen Strompfad durch diese Teile gebildet.

Weiter bevorzugt erfolgt die Abgabe von Wärme durch den Widerstand 200 derart, dass der Energiespeicher 150 dadurch nicht wesentlich erwärmt wird. Dies kann beispielsweise durch Vorsehen eines gewissen Mindestabstandes zwischen dem Widerstand 200 und dem Energiespeicher 150 realisiert sein. Alternativ dazu kann auch ein thermischer Isolationskörper zwischen dem Widerstand 200 und dem Energiespeicher 150 vorgesehen sein.

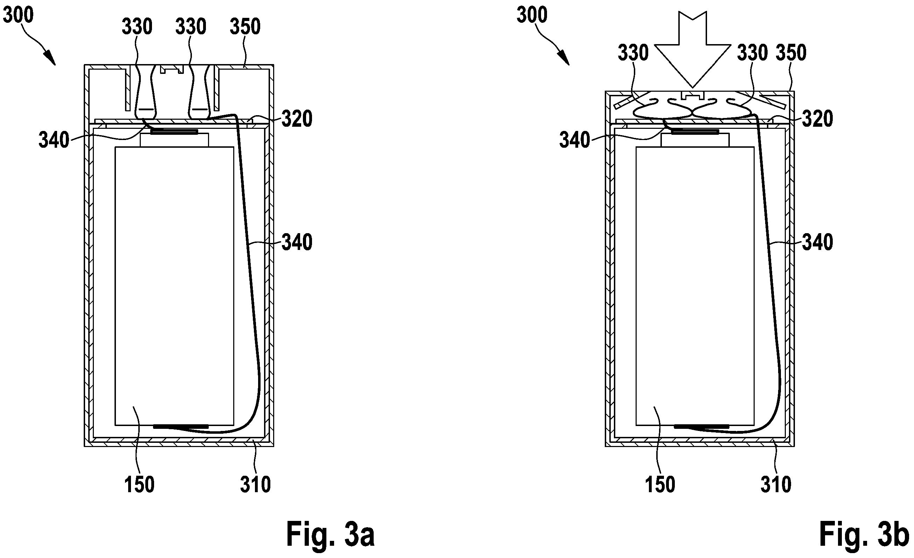

Fig. 3 zeigt einen vertikalen Schnitt durch eine mechanische Sicherheitseinrichtung 300, wobei Fig. 3A eine unversehrte Sicherheitseinrichtung 300 und Fig. 3B eine in vertikaler Richtung deformierte Sicherheitseinrichtung 300 darstellt.

In einem Gehäuse 310 ist der Energiespeicher 150 in Form einer zylindrischen Lithium-Ionen-Batterie aufgenommen. An einer Oberseite ist das Gehäuse 310 durch eine Abschlussplatte 320 verschlossen. An der Abschlussplatte 320 sind zwei Kontaktelemente 330 nebeneinander angeordnet und mittels elektrischer Leitungen 340 mit einem Pluspol bzw. Minuspol des Energiespeichers 150 elektrisch verbunden. Eine optionale Abdeckung 350 schließt die Sicherheitseinrichtung 300 derart nach oben ab, dass die Kontaktelemente 330 zum Anschluss von Verbrauchern von oben zugänglich bleiben, in seitlicher Richtung jedoch abgedeckt sind.

Jedes der Kontaktelemente 330 hat die Form eines auf der Unterseite geschlossenen Hohlzylinders, der auf ca. zwei Drittel seiner Höhe eingeschnürt ist. In einer alternativen Ausführungsform können die Kontaktelemente 330 auch aus einem flachen Bauelement, beispielsweise einem Blechstreifen, geformt sein, wobei die dargestellten Schnittflächen im Wesentlichen erhalten bleiben.

Wird die Sicherheitseinrichtung 300 in vertikaler Richtung gestaucht, so werden die Kontaktelemente 330 derart verformt, dass sie flacher und breiter werden, wodurch sich äußere Begrenzungen der Kontaktelemente 330 aufeinander zu bewegen, bis sie einen elektrischen Kontakt miteinander schließen. Die Abdeckung 350 wird bei der Verformung auf eine beliebige Weise verformt, wobei eine Zerstörung der Abdeckung 350 in Kauf genommen werden kann. Es ist lediglich darauf zu achten, dass kein Bestandteil der Abdeckung 350 in den Bereich zwischen die Kontaktelemente 330 gelangt, so dass der Kontakt zwischen den Kontaktelementen 330 unbeeinträchtigt bleibt. Durch den Kontaktschluss fließt zwischen den Kontaktelementen 330 ein elektrischer Strom, der die Kontaktelemente 330 erwärmt. Die Kontaktelemente 330 fungieren hier sowohl als Bestimmungseinrichtung, dass eine Deformierung des Energiespeichers 300 stattgefunden hat, als auch als Entladeeinrichtung zur Umwandlung von elektrischer Energie des Energiespeichers 150 in Wärmeenergie. Die Abschlussplatte 320 kann wärmeisolierend ausgelegt sein, um den Energiespeicher 150 von der auftretenden Wärme abzuschirmen.

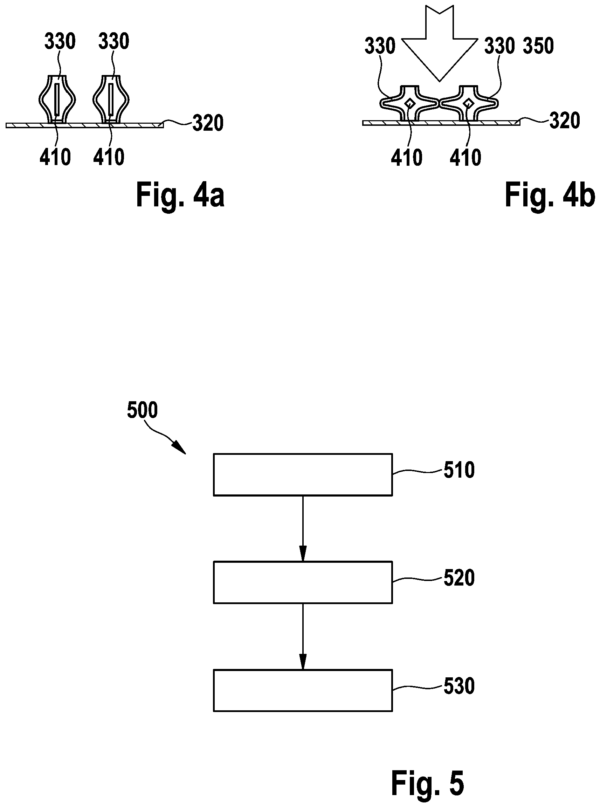

Fig. 4 zeigt eine alternative Ausführungsform der Kontaktelemente 330 der Sicherheitseinrichtung 300 aus Fig. 3. Zur vereinfachten Bezugnahme ist zusätzlich die Abschlussplatte 320 dargestellt. Fig. 4A zeigt unversehrte Kontaktelemente 330, Fig. 4B vertikal gestauchte Kontaktelemente 330.

Die Kontaktelemente 330 sind jeweils in einem Längsschnitt dargestellt und weisen eine Form auf, die aus einem bodenseitig geschlossenen Hohlzylinder hervorgeht. Zwischen einem oberen und einem unteren Ende weisen die Kontaktelemente 330 eine Ausbuchtung in radialer Richtung auf, wodurch sie eine bauchige Form erhalten. Schlitze 410 verlaufen in Fig. 4A vertikal in Längsrichtung der Kontaktelemente 330 analog den Darstellungen von Fign. 3A und 3B.

Die Schlitze 410 sind derart in die Kontaktelemente 330 eingebracht, dass bei der in Fig. 4B gezeigten Deformierung der Kontaktelemente 330 in vertikaler Richtung eine Verbreiterung der Kontaktelemente 330 aufeinander zu erleichtert ist. Die Schlitze 410 können bei der Deformierung die dargestellte Rhombusform annehmen. Bezüglich einer vertikalen Längsachse des Kontaktelements 330 liegen sich Schlitze 410 bevorzugterweise paarweise gegenüber, wobei in einem Bereich jedes Kontaktelements 330, der in Richtung des jeweils anderen Kontaktelements 330 weist, vorzugsweise kein Schlitz 410 eingebracht ist.

Fig. 5 zeigt ein Ablaufdiagramm eines Verfahrens 500 zur Steuerung der Sicherheitseinrichtung 100 aus Fig. 1. Das Verfahren 500 kann beispielsweise auf der Verarbeitungseinrichtung 110 der Sicherheitseinrichtung 100 aus Fig. 1 ablaufen. In abstrakter Weise ist das Verfahren 500 auch auf die Sicherheitseinrichtung 300 aus Fig. 3 anwendbar. Im Folgenden wird jedoch insbesondere auf eine Verwendung im Zusammenhang mit der Sicherheitseinrichtung 100 aus Fig. 1 eingegangen.

Das Verfahren 500 umfasst Schritte 510 bis 530. Im ersten Schritt 510 wird eine bevorstehende bzw. erfolgte Deformierung des Energiespeichers 150 bestimmt. Eine bevorstehende Deformierung kann beispielsweise bestimmt werden, wenn eine Beschleunigung im Bereich des Energiespeichers 150 besonders groß oder besonders klein ist oder wenn eine Sicherheitsfunktion im Umfeld des Energiespeichers 150 ausgelöst wird, etwa ein Gurtstraffer, ein Airbag, eine Sitzverstellung oder eine andere Sicherheitseinrichtung eines Kraftfahrzeugs zur Minimierung von Schäden durch einen Aufprall.

In Abhängigkeit des Bestimmungsergebnisses aus Schritt 510 wird im Schritt 520 der Energiespeicher 150 entladen. Die Entladung kann in Abhängigkeit von Begleitumständen der Deformierung durchgeführt werden, insbesondere können eine Entladegeschwindigkeit und ein Entladungsgrad von einer erwarteten Zeit bis zum Eintritt der Deformation, einer bevorstehenden oder erfolgten Deformationsgeschwindigkeit und/oder einem bevorstehenden oder erfolgten Deformationsgrad abhängig sein. Weitere Parameter können ebenfalls ausgewertet werden, beispielsweise ein Ladezustand des Energiespeichers 150. Ist der Energiespeicher 150 beispielsweise im Bereich zwischen 2/3 und voll geladen, können die Entladegeschwindigkeit und/oder der Entladungsgrad höher sein als wenn der Energiespeicher weniger als 2/3 seiner maximalen Kapazität geladen ist.

Im optionalen Schritt 530 wird das Entladen beendet. Der Schritt 530 kann ausgeführt werden, nachdem eine vorbestimmte Deformierung in Form eines vorbestimmten Deformierungsgrades erfolgt ist, ein vorbestimmter Ladegrad des Energiespeichers 150 und/oder ein vorbestimmter Entladungsgrad des Energiespeichers 150 erreicht sind. Der Schritt 530 kann ebenfalls von weiteren Parametern abhängig sein.

## Patentansprüche

1. Sicherheitseinrichtung (100, 300) mit einer Entladeeinrichtung (140, 330) zur Entladung eines elektrischen Energiespeichers (150) bei einer bevorstehenden oder erfolgten Deformierung des Energiespeichers (150), **dadurch gekennzeichnet, dass** das erste Kontaktelement (330) die Form eines eingeschnürten oder bauchigen Hohlzylinders aufweist mit zwei nebeneinander am Energiespeicher (150) angebrachten elektrischen Kontaktelementen (330), wobei das erste Kontaktelement (330) dazu eingerichtet ist, sich bei axialer Stauchung radial auszudehnen, so dass eine leitende Verbindung mit dem zweiten Kontaktelement (330) entsteht.

2. Sicherheitseinrichtung (100) nach Anspruch 1, **gekennzeichnet durch** eine Bestimmungseinrichtung (110) zur Bestimmung der bevorstehenden oder erfolgten Deformierung des Energiespeichers (150) und eine Entladeeinrichtung (140) zur Entladung des Energiespeichers (150) in Abhängigkeit des Bestimmungsergebnisses.

3. Sicherheitseinrichtung (100) nach Anspruch 2, **dadurch gekennzeichnet, dass** die Bestimmungseinrichtung (110) dazu eingerichtet ist, eine Deformierungsgeschwindigkeit des Energiespeichers (150) zu bestimmen und die Entladeeinrichtung (140) dazu eingerichtet ist, den Energiespeicher (150) in Abhängigkeit der bestimmten Deformierungsgeschwindigkeit zu entladen.

4. Sicherheitseinrichtung (100) nach Anspruch 2 oder 3, **dadurch gekennzeichnet, dass** die Bestimmungseinrichtung (110) dazu eingerichtet ist, einen Deformierungsgrad des Energiespeichers (150) zu bestimmen und die Entladeeinrichtung (140) dazu eingerichtet ist, den Energiespeicher (150) in Abhängigkeit des bestimmten Deformierungsgrades zu entladen.

5. Sicherheitseinrichtung (300) nach Anspruch 1, **dadurch gekennzeichnet, dass** das erste Kontaktelement (330) einen axialen Schlitz (410) aufweist.

6. Sicherheitseinrichtung (100, 300) nach einem der Ansprüche 2 bis 5, **dadurch gekennzeichnet, dass** die Entladeeinrichtung (140, 330) dazu eingerichtet ist, elektrische Energie in Wärmeenergie umzuwandeln.

7. Sicherheitseinrichtung (100, 300) nach Anspruch 6, **gekennzeichnet durch** eine thermische Masse (250), die wärmeleitfähig mit der Entladeeinrichtung (140, 330) verbunden ist und die ihren Aggregatszustand unter Aufnahme von Wärmeenergie wechselt.

## Claims

1. Safety device (100, 300) having a discharge device (140, 330) for discharging an electrical energy store (150) in the event of imminent deformation of the energy store (150) or in the event of deformation of the energy store having taken place, **characterized in that** the first contact element (330) has the shape of a constricted or convex hollow cylinder with two electrical contact elements (330) which are attached to the energy store (150) next to one another, wherein the first contact element (330) is designed to radially expand in the event of axial compression, so that a conductive connection to the second contact element (330) is established.

2. Safety device (100) according to Claim 1, **characterized by** a determination device (110) for determining the imminent deformation of the energy store (150) or determining that deformation of the energy store has taken place and by a discharge device (140) for discharging the energy store (150) depending on the result of the determination.

3. Safety device (100) according to Claim 2, **characterized in that** the determination device (110) is designed to determine a rate of deformation of the energy store (150), and the discharge device (140) is designed to discharge the energy store (150) depending on the determined rate of deformation.

4. Safety device (100) according to Claim 2 or 3, **characterized in that** the determination device (110) is designed to determine a degree of deformation of the energy store (150), and the discharge device (140) is designed to discharge the energy store (150) depending on the determined degree of deformation.

5. Safety device (300) according to Claim 1, **characterized in that** the first contact element (330) has an axial slot (410).

6. Safety device (100, 300) according to one of Claims 2 to 5, **characterized in that** the discharge device (140, 330) is designed to convert electrical energy into thermal energy.

7. Safety device (100, 300) according to Claim 6, **characterized by** a thermal mass (250) which is thermally conductively connected to the discharge device (140, 330) and which changes its state of aggregation as it absorbs thermal energy.

## Revendications

1. Dispositif de sécurité (100, 300) comprenant un dispositif de décharge (140, 330) destiné à décharger un accumulateur d'énergie (150) électrique lorsqu'une déformation de l'accumulateur d'énergie (150) est imminente ou a eu lieu, **caractérisé en ce que** le premier élément de contact (330) présente la forme d'un cylindre creux étranglé ou bombé pourvu de deux éléments de contact (330)' électriques montés l'un à côté de l'autre sur l'accumulateur d'énergie (150), le premier élément de contact (330) étant conçu pour se dilater dans le sens radial dans le cas d'un écrasement axial, de sorte qu'il se produit une liaison conductrice avec le deuxième élément de contact (330).

2. Dispositif de sécurité (100) selon la revendication 1, **caractérisé par** un dispositif de détermination (110) destiné à déterminer la déformation imminente ou ayant eu lieu de l'accumulateur d'énergie (150) et un dispositif de décharge (140) destiné à décharger l'accumulateur d'énergie (150) en fonction du résultat de la détermination.

3. Dispositif de sécurité (100) selon la revendication 2, **caractérisé en ce que** le dispositif de détermination (110) est conçu pour déterminer une vitesse de déformation de l'accumulateur d'énergie (150) et le dispositif de décharge (140) est conçu pour décharger l'accumulateur d'énergie (150) en fonction de la vitesse de déformation déterminée.

4. Dispositif de sécurité (100) selon la revendication 2 ou 3, **caractérisé en ce que** le dispositif de détermination (110) est conçu pour déterminer un degré de déformation de l'accumulateur d'énergie (150) et le dispositif de décharge (140) est conçu pour décharger l'accumulateur d'énergie (150) en fonction du degré de déformation déterminé.

5. Dispositif de sécurité (300) selon la revendication 1, **caractérisé en ce que** le premier élément de contact (330) possède une fente axiale (410).

6. Dispositif de sécurité (100, 300) selon l'une des revendications 2 à 5, **caractérisé en ce que** le dispositif de décharge (140, 330) est conçu pour convertir de l'énergie électrique en énergie thermique.

7. Dispositif de sécurité (100, 300) selon la revendication 6, **caractérisé par** une masse thermique (250) qui est reliée de manière thermoconductrice avec le dispositif de décharge (140, 330) et qui modifie son état d'agrégation en absorbant de l'énergie thermique.
